# EUROPEAN PATENT APPLICATION

(11) **EP 4 826 440 A1**
(43) Date of publication of application: **21.10.2026**
(21) Application number: 23961071.0
(22) Date of filing: 12.12.2023
(51) Int. Cl.: G02F 1/01, C03C 27/12, B32B 1/00, G02F 1/13

(54) **CURVED-SURFACE DIMMING FILM, AND CURVED-SURFACE DIMMING GLASS AND PREPARATION THEREFOR**

(71) Applicant: Zhejiang Jingyi New Material Technology Co. Ltd, Taizhou, Zhejiang 318020 (CN)
(72) Inventor: LIANG, Bin, Zhejiang 318020 (CN); LI, Yanan, Dorval Quebec H9P 1K2 (CA); ZHANG, Dawei, Zhejiang 318020 (CN); ZHANG, Yuzhe, Zhejiang 318020 (CN); ZHAO, Shiyong, Dorval Quebec H9P 1K2 (CA); XIAO, Shuyong, Dorval Quebec H9P 1K2 (CA)
(74) Representative: Epping - Hermann - Fischer
(86) International application number: PCT/CN2023/138058
(87) International publication number: WO 2025/123205

(57) **Abstract**

The present invention provides a curved-surface dimming film, and curved-surface dimming glass and a preparation method therefor. By using the technical means of pulsed thermal shock and hot-press forming for a flat dimming film, a curved-surface dimming film having a predetermined curved-surface function θ is prepared, and corresponding curved-surface glass is further used to prepare curved-surface dimming glass. In this way, the appearance defect of wrinkles on a dimming film caused by using a flat dimming film to prepare curved-surface dimming glass is avoided. The method is simple and easy to control, and has good application prospects.

## Description

### FIELD

The present disclosure relates to a dimming film and a dimming glass, and more specifically relates to a curved dimming film, a curved dimming glass, and preparation thereof.

### BACKGROUND

Dimming glass is a light-controlling device, mainly consisting of a dimming film laminated between two layers of transparent glass. The types of the dimming film include suspended particle device (SPD) film, polymer dispersed liquid crystal (PDLC) film, electrochromic (EC) film, thermochromic (TC) film, photochromic (PC) film and so on. Dimming glass prepared using a suspended particle device film, a polymer dispersed liquid crystal film, and an electrochromic film is referred to as suspended particle device dimming glass, polymer dispersed liquid crystal dimming glass, and electrochromic dimming glass, respectively. For the suspended particle device dimming glass, the polymer dispersed liquid crystal dimming glass and the electrochromic dimming glass, when power is applied, the arrangement or state of the materials in the dimming film changes, thereby altering the light transmittance characteristics of the dimming glass, such as switching from a low transmittance state to a high transmittance state, or from a high transmittance state to a low transmittance state. Such dimming glass, which can achieve rapid switching between an on-state and an off-state under the action of an electric field/current, has advantages of actively regulating light transmittance and saving energy. The device can be used as smart windows for spacecraft, high-speed trains, automobiles and buildings, as well as rearview mirrors, sunglasses and displays.

With the rapid development of panoramic sunroofs in new energy vehicles and glass curtain walls in buildings, customer demands for diversified glass used in automotive panoramic sunroofs and building curtain walls are increasing, particularly with respect to various complex multi-curved glass. However, forming curved dimming glass from curved glass has become a bottleneck restricting the application of such glass. This process is completely different from that of planar dimming glass. During the forming process of curved dimming glass, as the curvature increases and multi-curved surfaces are required, the use of a planar dimming film tends to cause wrinkling of the dimming film in the laminated curved dimming glass, which seriously affects the appearance of the glass and ultimately results in a low product yield.

Therefore, in the prior art, when preparing curved dimming glass, there exists a problem that the use of a planar dimming film leads to wrinkling in the laminated curved dimming glass. Accordingly, there is a need to develop an improved technology to solve the problem of wrinkling defects in the appearance of curved dimming glass.

### SUMMARY

To solve the above technical problem, the present disclosure provides a curved dimming film, comprising:
a first transparent substrate,
a first transparent conductive layer disposed on the first transparent substrate;
a second transparent substrate;
a second transparent conductive layer disposed on the second transparent substrate, wherein the first transparent conductive layer and the second transparent conductive layer are disposed opposite to each other; and
a dimming active layer disposed between the first transparent conductive layer and the second transparent conductive layer;
wherein the curved dimming film has a curved-surface function ⊖ ranging from 20 mm/m to 300 mm/m, and a dimming performance T of greater than or equal to 20%.

Preferably, the curved dimming film has a curved-surface function ⊖ ranging from 35 mm/m to 250 mm/m, and a dimming performance T of greater than or equal to 25%.

Preferably, the dimming active layer is at least one selected the group consisting of a suspended particle device dimming active layer, a polymer dispersed liquid crystal dimming active layer and an electrochromic dimming active layer.

Preferably, the first transparent substrate and the second transparent substrate are transparent plastic sheets.

Preferably, the first transparent substrate and the second transparent substrate are at least one each independently selected from the group consisting of a polyester transparent plastic sheet and a polyolefin transparent plastic sheet.

Preferably, the first transparent substrate and the second transparent substrate are at least one each independently selected from the group consisting of PET, PMMA, and PC transparent plastic sheets.

Preferably, the first transparent conductive layer and the second transparent conductive layer are each independently one or more selected from the group consisting of an ITO conductive layer, an FZO conductive layer, an IZO conductive layer, a GZO conductive layer, an AZO conductive layer, a PEDOT conductive layer, a nano-Ag wire conductive layer, conductive graphene, a conductive polymer and a nano-Cu wire conductive layer.

Preferably, the curved dimming film is suitable for manufacturing an automotive sunroof dimming glass.

Preferably, a cross-sectional contour of a cross-sectional line of the curved dimming film is at least one of a straight line, a circular arc, an elliptical arc, a parabola and an asymmetric curve.

Preferably, a cross-sectional contour of a cross-sectional line of the curved dimming film is at least one of a straight line, a circular arc and an elliptical arc.

The present disclosure further provides a method for preparing a curved dimming film, comprising subjecting a planar dimming film sequentially to pulse thermal shock and hot-press forming to obtain the curved dimming film.

Preferably, the pulse thermal shock and the hot-press forming comprise:
a first step of pulse thermal shock, performing heating with a heating device at a temperature of 120°C to 280°C for 3 seconds to 60 seconds;
a second step of hot-press forming, treating in a mold at a temperature of 50°C to 180°C and a gauge pressure of 0.05MPa to 1.5MPa for 5 seconds to 90 seconds;
wherein the pulse thermal shock is performed at a temperature of at least 20°C higher than the temperature of hot-press forming;
wherein the pulse in the pulse thermal shock is emphasized as having a short heating time in the present disclosure.

Preferably, the pulse thermal shock and the hot-press forming comprise:
a first step of pulse thermal shock, performing heating with a heating device at a temperature of 130°C to 250°C for 4 seconds to 35 seconds;
a second step of hot-press forming, treating in a mold at a temperature of 80°C to 140°C and a gauge pressure of 0.2MPa to 1.2MPa for 10 seconds to 60 seconds;
wherein the pulse thermal shock is performed at a temperature of at least 30°C higher than the temperature of hot-press forming.

Preferably, the mold for the hot-press forming comprises an upper forming mold and a lower forming mold, and the upper forming mold and the lower forming mold have a curved-surface function ⊖ ranging from 20 mm/m to 300 mm/m.

Preferably, the mold for the hot-press forming comprises an upper forming mold and a lower forming mold, and the upper forming mold and the lower forming mold have a curved-surface function ⊖ ranging from 35 mm/m to 250 mm/m.

Preferably, in a section of a cross-sectional line at the same stacked position, a ratio of curvature R of the upper forming mold to the lower forming mold ranges from 0.9 to 1.1.

Preferably, in a section of a cross-sectional line at the same stacked position, a ratio of curvature R of the upper forming mold to the lower forming mold ranges from 0.95 to 1.05.

Preferably, the upper forming mold and the lower forming mold are capable of being independently controlled in heating temperature.

Preferably, an opposing surface of the upper forming mold and/or the lower forming mold has an uneven structure.

Preferably, the uneven structure has a height difference between a highest point and a lowest point ranging from 1µm to 50µm.

Preferably, the lower forming mold has dense vacuum extraction channels with a pore diameter of 2 mm or less.

Preferably, a vacuum system through the vacuum extraction channels has a gauge pressure of lower than -0.08 MPa.

Preferably, a pulse thermal shock step is transferred to a hot-press forming step for a duration of not more than 50 seconds.

Preferably, a pulse thermal shock step is transferred to a hot-press forming step for a duration of not more than 30 seconds.

Preferably, a pulse thermal shock step is transferred to a hot-press forming step for a duration of not more than 20 seconds.

Preferably, after the steps of pulse thermal shock and hot-press forming, the method further comprises a third step of cold shock shaping. That is, the curved dimming film is prepared by subjecting a planar dimming film sequentially to pulse thermal shock and hot-press forming, or by subjecting a planar dimming film sequentially to pulse thermal shock, hot-press forming, and cold shock shaping.

Preferably, the cold shock shaping comprises treating the curved dimming film obtained by the pulse thermal shock and hot-press forming in a mold at a temperature of below 40°C and a gauge pressure of 0.05MPa to 1.5MPa for 10 seconds to 600 seconds.

Preferably, the cold shock shaping comprises treating the curved dimming film obtained by the pulse thermal shock and hot-press forming in a mold at a temperature of below 30°C and a gauge pressure of 0.2MPa to 1.2MPa for 30 seconds to 500 seconds.

Preferably, the cold shock shaping comprises treating the curved dimming film obtained by the pulse thermal shock and hot-press forming in a mold at a temperature of 0°C to 20°C and a gauge pressure of 0.2MPa to 1.2MPa for 50 seconds to 450 seconds.

Preferably, the mold for the cold shock shaping comprises an upper shaping mold and a lower shaping mold, and the upper shaping mold and the lower shaping mold have a curved-surface function ⊖ ranging from 20 mm/m to 300 mm/m.

Preferably, the mold for the cold shock shaping comprises an upper shaping mold and a lower shaping mold, and the upper shaping mold and the lower shaping mold have a curved-surface function ⊖ ranging from 35 mm/m to 250 mm/m.

Preferably, in a section of a cross-sectional line at the same stacked position, a ratio of curvature R of the upper shaping mold to the lower shaping mold ranges from 0.9 to 1.1.

Preferably, in a section of a cross-sectional line at the same stacked position, a ratio of curvature R of the upper shaping mold to the lower shaping mold ranges from 0.95 to 1.05.

Preferably, the upper shaping mold and the lower shaping mold are capable of being independently controlled in heating temperature.

Preferably, an opposing surface of the upper shaping mold and/or the lower shaping mold has an uneven structure.

Preferably, the uneven structure has a height difference between a highest point and a lowest point ranging from 1µm to 50µm.

Preferably, the lower shaping mold has dense vacuum extraction channels with a pore diameter of 2 mm or less.

Preferably, a vacuum system through the vacuum extraction channels has a gauge pressure of lower than -0.08 MPa.

Preferably, a transfer duration from the pulse thermal shock step to the hot-press forming step and a transfer duration from the hot-press forming step to the cold shock shaping step are each not more than 50 seconds.

Preferably, a transfer duration from the pulse thermal shock step to the hot-press forming step and a transfer duration from the hot-press forming step to the cold shock shaping step are each not more than 30 seconds.

Preferably, a transfer duration from the pulse thermal shock step to the hot-press forming step and a transfer duration from the hot-press forming step to the cold shock shaping step are each not more than 20 seconds.

Preferably, the curved-surface function ⊖ of the upper forming mold and the lower forming mold of the hot-press forming mold is equal to the curved-surface function ⊖ of the upper shaping mold and the lower shaping mold of the cold shock shaping mold.

Preferably, in a section of a cross-sectional line at the same stacked position of the hot-press forming mold, the curvatures R of the upper forming mold and the lower forming mold, and in a section of a cross-sectional line at the same stacked position of the cold shock shaping mold, the curvatures R of the upper shaping mold and the lower shaping mold, have mutual ratios of the four curvatures R ranging from 0.9 to 1.1. That is, when the curved dimming film is respectively placed in the hot-press forming mold and the cold shock shaping mold, with respect to a same position of the curved dimming film, the mutual ratios of four curvature R values in sections of cross-sectional lines at corresponding positions of the upper forming mold and the lower forming mold of the hot-press forming mold and the upper shaping mold and the lower shaping mold of the cold shock shaping mold are ranging from 0.9 to 1.1.

Preferably, the curved dimming film has a curved-surface function ⊖ ranging from 20 mm/m to 300 mm/m, and a dimming performance T of greater than or equal to 20%.

Preferably, the curved dimming film has a curved-surface function ⊖ ranging from 35 mm/m to 250 mm/m, and a dimming performance T of greater than or equal to 25%.

Preferably, the type of the planar dimming film is not particularly limited, and a conventional dimming film well known to those skilled in the art may be used, without requiring additional treatment to the conventional dimming film.

Preferably, the planar dimming film is at least one selected from the group consisting of a suspended particle device dimming film, a polymer dispersed liquid crystal dimming film, and an electrochromic dimming film.

Preferably, the curved dimming film is suitable for manufacturing an automotive sunroof dimming glass.

Preferably, a cross-sectional contour of a cross-sectional line at the same stacked position of the upper forming mold and the lower forming mold is at least one of a straight line, a circular arc, an elliptical arc, a parabola and an asymmetric curve.

Preferably, a cross-sectional contour of a cross-sectional line at the same stacked position of the upper forming mold and the lower forming mold is at least one of a straight line, a circular arc and an elliptical arc.

Preferably, a cross-sectional contour of a cross-sectional line at the same stacked position of the upper shaping mold and the lower shaping mold is at least one of a straight line, a circular arc, an elliptical arc, a parabola and an asymmetric curve.

Preferably, a cross-sectional contour of a cross-sectional line at the same stacked position of the upper shaping mold and the lower shaping mold is at least one of a straight line, a circular arc and an elliptical arc.

Preferably, a cross-sectional contour of a cross-sectional line of the curved dimming film is at least one of a straight line, a circular arc, an elliptical arc, a parabola and an asymmetric curve.

Preferably, a cross-sectional contour of a cross-sectional line of the curved dimming film is at least one of a straight line, a circular arc and an elliptical arc. The present disclosure further provides a curved dimming glass, comprising:
a first curved glass; a second curved glass; a curved dimming film laminated between the first curved glass and the second curved glass;
wherein a first interlayer is disposed between the first curved glass and the curved dimming film, and/or a second interlayer is disposed between the second curved glass and the curved dimming film;
wherein the curved dimming glass has a curved-surface function ⊖ ranging from 20 mm/m to 300 mm/m, and a dimming performance T of greater than or equal to 5%.

Preferably, the curved dimming glass has a curved-surface function ⊖ ranging from 35 mm/m to 250 mm/m, and a dimming performance T of greater than or equal to 8%.

Preferably, the type of the dimming film is not particularly limited, and a conventional dimming film well known to those skilled in the art may be used.

Preferably, the curved dimming film is at least one selected from the group consisting of a suspended particle device dimming film, a polymer dispersed liquid crystal dimming film and an electrochromic dimming film.

Preferably, the curved dimming film is the curved dimming film as described above or the curved dimming film prepared by the method as described above.

Preferably, the type of the interlayer material is not particularly limited, and a conventional adhesive film for dimming glass well known to those skilled in the art may be used, which may be an EVA film, a TPU film, or a PVB film; a functional adhesive film may also be used, such as a UV-blocking EVA film, a UV-blocking TPU film, a UV-blocking PVB film, an infrared-blocking EVA film, an infrared-blocking TPU film, or an infrared-blocking PVB film; and a colored EVA film, TPU film, or PVB film may also be selected.

Preferably, the interlayer material is at least one selected from the group consisting of an EVA film, a TPU film and a PVB film.

Preferably, the types of the first curved glass and the second curved glass are not particularly limited, and conventional curved glass for dimming glass well known to those skilled in the art may be used, which may be common glass such as inorganic glass or organic glass, wherein the organic glass may be, for example, a PC sheet or a PMMA sheet; a functional glass may also be used, such as UV-blocking glass, IR-blocking glass, Low-E glass, tempered glass, or antibacterial glass; and a colored glass such as gray glass or brown glass may also be selected.

Preferably, the curved dimming glass includes an automotive sunroof dimming glass.

Preferably, a cross-sectional contour of a cross-sectional line of the curved dimming glass is at least one of a straight line, a circular arc, an elliptical arc, a parabola and an asymmetric curve.

Preferably, a cross-sectional contour of a cross-sectional line of the curved dimming glass is at least one of a straight line, a circular arc and an elliptical arc.

Preferably, a cross-sectional contour of a cross-sectional line of the curved dimming film is at least one of a straight line, a circular arc, an elliptical arc, a parabola and an asymmetric curve.

Preferably, a cross-sectional contour of a cross-sectional line of the curved dimming film is at least one of a straight line, a circular arc and an elliptical arc. The present disclosure further provides a method for preparing a curved dimming glass, comprising:
providing a curved glass;
providing an interlayer;
providing a curved dimming film, which is fitted to the curved glass, having a curved-surface function ⊖ ranging from 20 mm/m to 300 mm/m;
layering the curved glass, the curved dimming film, and the interlayer according to a structure of the curved dimming glass, and then performing lamination processing.

Preferably, fitting the curved dimming film to the curved glass means that in a section of a cross-sectional line at the same stacked position, the ratio of curvature R of the curved glass to curvature R of the corresponding curved dimming film ranges from 0.7 to 1.3.

Preferably, fitting the curved dimming film to the curved glass means that in a section of a cross-sectional line at the same stacked position, the ratio of curvature R of the curved glass to curvature R of the corresponding curved dimming film ranges from 0.8 to 1.2.

Preferably, fitting the curved dimming film to the curved glass means that in a section of a cross-sectional line at the same stacked position, the ratio of curvature R of the curved glass to curvature R of the corresponding curved dimming film ranges from 0.9 to 1.1.

Preferably, the curved dimming film having the curved-surface function ⊖ is prepared by subjecting a planar dimming film sequentially to pulse thermal shock and hot-press forming.

Preferably, the pulse thermal shock and the hot-press forming comprise:
a first step of pulse thermal shock, performing heating with a heating device at a temperature of 120°C to 280°C for 3 seconds to 60 seconds;
a second step of hot-press forming, treating in a mold at a temperature of 50°C to 180°C and a gauge pressure of 0.05MPa to 1.0MPa for 5 seconds to 90 seconds;
wherein the pulse thermal shock is performed at a temperature of at least 20°C higher than the temperature of hot-press forming.

Preferably, the pulse thermal shock and the hot-press forming comprise:
a first step of pulse thermal shock, performing heating with a heating device at a temperature of 130°C to 250°C for 4 seconds to 35 seconds;
a second step of hot-press forming, treating in a mold at a temperature of 80°C to 140°C and a gauge pressure of 0.1MPa to 0.8MPa for 10 seconds to 60 seconds;
wherein the pulse thermal shock is performed at a temperature of at least 30°C higher than the temperature of hot-press forming.

Preferably, the mold for the hot-press forming comprises an upper forming mold and a lower forming mold, and the upper forming mold and the lower forming mold have a curved-surface function ⊖ ranging from 20 mm/m to 300 mm/m.

Preferably, the mold for the hot-press forming comprises an upper forming mold and a lower forming mold, and the upper forming mold and the lower forming mold have a curved-surface function ⊖ ranging from 35 mm/m to 250 mm/m.

Preferably, in a section of a cross-sectional line at the same stacked position, a ratio of curvature R of the upper forming mold to the lower forming mold ranges from 0.9 to 1.1.

Preferably, in a section of a cross-sectional line at the same stacked position, a ratio of curvature R of the upper forming mold to the lower forming mold ranges from 0.95 to 1.05.

Preferably, the upper forming mold and the lower forming mold are capable of being independently controlled in heating temperature.

Preferably, an opposing surface of the upper forming mold and/or the lower forming mold has an uneven structure.

Preferably, the uneven structure has a height difference between a highest point and a lowest point ranging from 1µm to 50µm.

Preferably, the lower forming mold has dense vacuum extraction channels with a pore diameter of 2 mm or less.

Preferably, a vacuum system through the vacuum extraction channels has a gauge pressure of lower than -0.08 MPa.

Preferably, a pulse thermal shock step is transferred to a hot-press forming step for a duration of not more than 50 seconds.

Preferably, a pulse thermal shock step is transferred to a hot-press forming step for a duration of not more than 30 seconds. Preferably, a pulse thermal shock step is transferred to a hot-press forming step for a duration of not more than 20 seconds.

Preferably, after the steps of pulse thermal shock and hot-press forming, the method further comprises a third step of cold shock shaping. That is, the curved dimming film is prepared by subjecting a planar dimming film sequentially to pulse thermal shock and hot-press forming, or by subjecting a planar dimming film sequentially to pulse thermal shock, hot-press forming, and cold shock shaping.

Preferably, the cold shock shaping comprises treating the curved dimming film obtained by the pulse thermal shock and hot-press forming in a mold at a temperature of below 40°C and a gauge pressure of 0.05MPa to 1.5MPa for 10 seconds to 600 seconds.

Preferably, the cold shock shaping comprises treating the curved dimming film obtained by the pulse thermal shock and hot-press forming in a mold at a temperature of below 30°C and a gauge pressure of 0.2MPa to 1.2MPa for 30 seconds to 500 seconds.

Preferably, the cold shock shaping comprises treating the curved dimming film obtained by the pulse thermal shock and hot-press forming in a mold at a temperature of 0°C to 20°C and a gauge pressure of 0.2MPa to 1.2MPa for 50 seconds to 450 seconds.

Preferably, the mold for the cold shock shaping comprises an upper shaping mold and a lower shaping mold, and the upper shaping mold and the lower shaping mold have a curved-surface function ⊖ ranging from 20 mm/m to 300 mm/m.

Preferably, the mold for the cold shock shaping comprises an upper shaping mold and a lower shaping mold, and the upper shaping mold and the lower shaping mold have a curved-surface function ⊖ ranging from 35 mm/m to 250 mm/m.

Preferably, in a section of a cross-sectional line at the same stacked position, a ratio of curvature R of the upper shaping mold to the lower shaping mold ranges from 0.9 to 1.1.

Preferably, in a section of a cross-sectional line at the same stacked position, a ratio of curvature R of the upper shaping mold to the lower shaping mold ranges from 0.95 to 1.05.

Preferably, the upper shaping mold and the lower shaping mold are capable of being independently controlled in heating temperature.

Preferably, an opposing surface of the upper shaping mold and/or the lower shaping mold has an uneven structure.

Preferably, the uneven structure has a height difference between a highest point and a lowest point ranging from 1µm to 50µm.

Preferably, the lower shaping mold has dense vacuum extraction channels with a pore diameter of 2 mm or less.

Preferably, a vacuum system through the vacuum extraction channels has a gauge pressure of lower than -0.08 MPa.

Preferably, a transfer duration from the pulse thermal shock step to the hot-press forming step and a transfer duration from the hot-press forming step to the cold shock shaping step are each not more than 50 seconds.

Preferably, a transfer duration from the pulse thermal shock step to the hot-press forming step and a transfer duration from the hot-press forming step to the cold shock shaping step are each not more than 30 seconds.

Preferably, a transfer duration from the pulse thermal shock step to the hot-press forming step and a transfer duration from the hot-press forming step to the cold shock shaping step are each not more than 20 seconds.

Preferably, the curved-surface function ⊖ of the upper forming mold and the lower forming mold of the hot-press forming mold is equal to the curved-surface function ⊖ of the upper shaping mold and the lower shaping mold of the cold shock shaping mold.

Preferably, in a section of a cross-sectional line at the same stacked position of the hot-press forming mold, the curvatures R of the upper forming mold and the lower forming mold, and in a section of a cross-sectional line at the same stacked position of the cold shock shaping mold, the curvatures R of the upper shaping mold and the lower shaping mold, have mutual ratios of the four curvatures R ranging from 0.9 to 1.1. That is, when the curved dimming film is respectively placed in the hot-press forming mold and the cold shock shaping mold, with respect to a same position of the curved dimming film, the mutual ratios of four curvature R values in sections of cross-sectional lines at corresponding positions of the upper forming mold and the lower forming mold of the hot-press forming mold and the upper shaping mold and the lower shaping mold of the cold shock shaping mold are ranging from 0.9 to 1.1. Preferably, the lamination processing method is not particularly limited, and a conventional lamination method for dimming glass well known to those skilled in the art may be used, such as lamination in a laminator, or lamination in an autoclave or a lamination box/furnace.

Preferably, the lamination processing is performed at a lamination temperature of 80°C to 130°C and a lamination gauge pressure of 0.1MPa to 1.2MPa for a duration of 30 minutes to 120 minutes.

Preferably, the lamination processing is performed at a lamination temperature of 90°C to 120°C and a lamination gauge pressure of 0.3MPa to 1.1MPa for a duration of 30 minutes to 120 minutes.

Preferably, the curved dimming glass has a curved-surface function ⊖ ranging from 20 mm/m to 300 mm/m, and a dimming performance T of greater than or equal to 5%.

Preferably, the curved dimming glass has a curved-surface function ⊖ ranging from 35 mm/m to 250 mm/m, and a dimming performance T of greater than or equal to 8%.

Preferably, the type of the planar dimming film is not particularly limited, and a conventional dimming film well known to those skilled in the art may be used, without requiring additional treatment to the conventional dimming film.

Preferably, the planar dimming film is at least one selected from the group consisting of a suspended particle device dimming film, a polymer dispersed liquid crystal dimming film, and an electrochromic dimming film.

Preferably, the curved dimming film is the curved dimming film as described above or the curved dimming film prepared by the method as described above. The curved dimming glass includes an automotive sunroof dimming glass.

Preferably, a cross-sectional contour of a cross-sectional line at the same stacked position of the upper forming mold and the lower forming mold is at least one of a straight line, a circular arc, an elliptical arc, a parabola, and an asymmetric curve.

Preferably, a cross-sectional contour of a cross-sectional line at the same stacked position of the upper forming mold and the lower forming mold is at least one of a straight line, a circular arc, and an elliptical arc.

Preferably, a cross-sectional contour of a cross-sectional line at the same stacked position of the upper shaping mold and the lower shaping mold is at least one of a straight line, a circular arc, an elliptical arc, a parabola, and an asymmetric curve.

Preferably, a cross-sectional contour of a cross-sectional line at the same stacked position of the upper shaping mold and the lower shaping mold is at least one of a straight line, a circular arc, and an elliptical arc.

Preferably, a cross-sectional contour of a cross-sectional line of the curved dimming glass is at least one of a straight line, a circular arc, an elliptical arc, a parabola, and an asymmetric curve.

Preferably, a cross-sectional contour of a cross-sectional line of the curved dimming glass is at least one of a straight line, a circular arc, and an elliptical arc.

Preferably, a cross-sectional contour of a cross-sectional line of the curved dimming film is at least one of a straight line, a circular arc, an elliptical arc, a parabola, and an asymmetric curve.

Preferably, a cross-sectional contour of a cross-sectional line of the curved dimming film is at least one of a straight line, a circular arc, and an elliptical arc.

Certainly, a method for preparing a curved dimming glass may further comprise:
providing a curved glass;
providing an interlayer;
providing a curved dimming film, which is fitted to the curved glass, having a curved-surface function ⊖ ranging from 20 mm/m to 300 mm/m;
layering the curved glass, the curved dimming film, and the interlayer according to a structure of the curved dimming glass, and then performing lamination processing.

It can be seen from the above that, in the process of preparing the curved dimming glass, the curved dimming film needs to use a corresponding curved glass, or in other words, the curved glass needs to use a corresponding curved dimming film.

The present disclosure further provides a use of the curved dimming glass in automotive window glass, sunroof glass, or glass curtain wall.

In the present disclosure, a two parts of opposing surface of the upper forming mold and/or the lower forming mold for hot-press forming process has an uneven structure. And the uneven structure has a height difference between a highest point and a lowest point ranging from 1µm to 50µm. Such a structure is more conducive to fixing the dimming film during the hot-press forming process, preventing displacement between the dimming film and the mold surfaces. The lower forming mold has dense vacuum extraction channels with a pore diameter of 2 mm or less. During hot-press forming, vacuum is applied so that the dimming film can more closely adhere to the surface of the lower forming mold.

In the present disclosure, a two parts of opposing surface of the upper shaping mold and/or the lower shaping mold for cold shock shaping has an uneven structure. And the uneven structure has a height difference between a highest point and a lowest point ranging from 1µm to 50µm. Such a structure is more conducive to fixing the dimming film during the cold shock shaping process, preventing displacement between the dimming film and the mold surfaces. The lower shaping mold has dense vacuum extraction channels with a pore diameter of 2 mm or less. During cold shock shaping, vacuum is applied so that the dimming film can more closely adhere to the surface of the lower shaping mold.

In the present disclosure, by precisely controlling the pulse thermal shock and hot-press forming conditions of a planar dimming film, it is ensured that the dimming active layer in the dimming film is not affected by high temperatures, while also allowing softening of the transparent substrates on both sides of the dimming film, thereby obtaining a curved dimming film having a predetermined curved-surface function ⊖. This precise "thermal condition" is crucial. The dimensional change of the dimming film before and after the pulse thermal shock and hot-press forming is controlled to not exceed 10%. The dimensional change refers to a variation in the size of the dimming film in any direction not exceeding 10%, preferably not exceeding 5%. The dimensional change C is defined as the absolute value of (pre-treatment dimension - post-treatment dimension)/pre-treatment dimension × 100%, and the maximum dimensional change in any direction is denoted as Cₘₐₓ, i.e., Cₘₐₓ ≤ 10%, preferably Cₘₐₓ ≤ 5%.

In the present disclosure, the curved dimming film obtained through pulse thermal shock and hot-press forming further includes a cold shock shaping step, which is intended to prevent the curved dimming film from undergoing elastic recovery deformation during natural cooling after the release of the hot-press forming pressure at elevated temperatures, which would otherwise reduce the curved-surface function ⊖. Cold shock shaping effectively prevents a reduction in the curved-surface function ⊖.

Experiments have shown that the curved dimming glass of the present disclosure, prepared by pulse thermal shock and hot-press forming of a planar dimming film, can achieve a curved dimming film with a predetermined curved-surface function ⊖. When applied in the production of curved dimming glass, this method resolves the issue of wrinkling defects in the appearance of the curved dimming glass prepared by using planar dimming films, demonstrating promising application prospects.

### BRIEF DESCRIPTION OF DRAWINGS

FIG. 1 is a schematic view of the curved dimming film of the present disclosure. In the schematic view, the transparent substrate, the transparent conductive layer, and the dimming active layer are regarded as an integral whole, and the curved dimming film is represented by a single-layer structure.
FIG. 2 is a schematic assembly view of the curved dimming glass of the present disclosure.
FIG. 3 is a schematic top view of the curved dimming glass of the present disclosure.
FIG. 4 is a schematic cross-sectional view of the curved dimming glass shown in FIG. 3 taken along the X-X direction or the Y-Y direction.
FIG. 5 is a schematic cross-sectional view of another curved dimming glass of the present disclosure taken along the X-X direction or the Y-Y direction.
FIG. 6 is a schematic cross-sectional view of yet another curved dimming glass of the present disclosure taken along the X-X direction or the Y-Y direction.
FIG. 7 is a photograph showing wrinkles of the dimming glass in Comparative Example 9 of the present disclosure.
FIG. 8 is a photograph showing wrinkles of the dimming glass in Comparative Example 10 of the present disclosure.
FIG. 9 is a photograph showing wrinkles of the dimming glass in Comparative Example 11 of the present disclosure.
FIG. 10 is a photograph showing wrinkles of the dimming glass in Comparative Example 12 of the present disclosure.

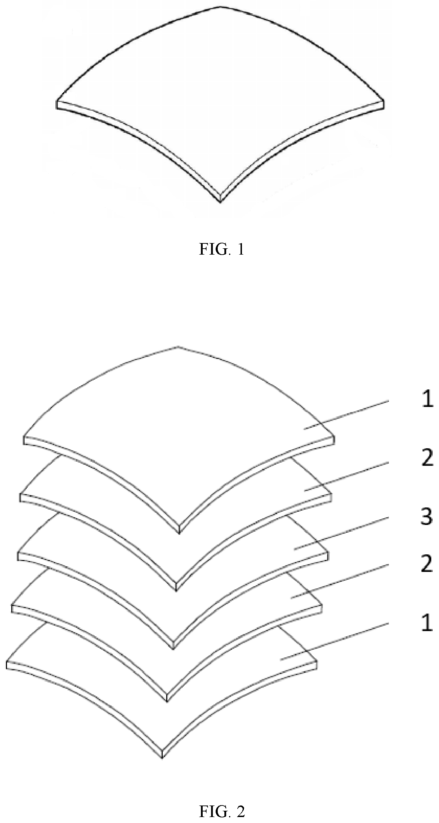

In FIG.s 4 and 5, the solid curved line segment ADB represents the curved dimming glass, and the dashed line ACB represents a reference plane. The length of the dashed straight line segment ACB is L (unit: meter), and the length of the dashed straight line segment CD is H (unit: millimeter). The dashed straight line segment CD is perpendicular to the dashed straight line segment ACB, i.e., the included angle β is 90°, wherein the maximum value of H is denoted as Hₘₐₓ. The included angle between the X-X cross-sectional line and the Y-Y cross-sectional line is α, with 0° < α ≤ 90°, and the intersection point O of the two cross-sectional lines is the projected centroid point of the curved dimming glass. In FIG. 2, 1 denotes transparent glass, 2 denotes an interlayer adhesive layer, and 3 denotes the dimming film.

### DETAILED DESCRIPTION

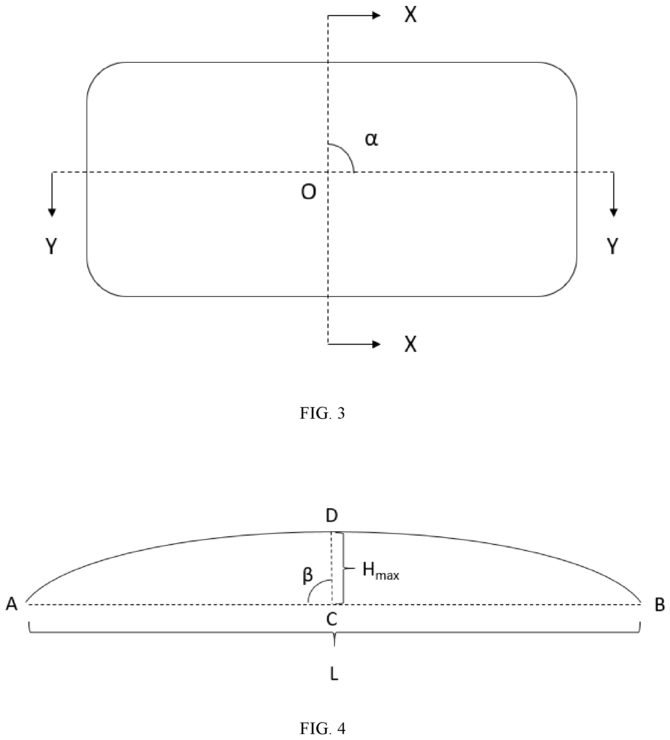

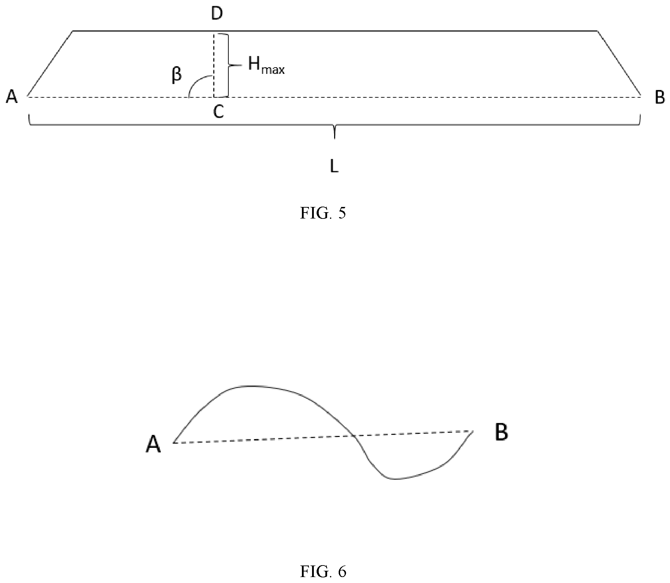

In the present disclosure, the curvature R of the curved dimming glass is defined as shown in FIG. 4 or FIG. 5: curvature R = Hₘₐₓ / L, where the unit of Hₘₐₓ is mm (millimeters), the unit of L is m (meters), and the unit of curvature R is mm/m (millimeters per meter).

In the present disclosure, a curved-surface function ⊖ is used to represent the surface characteristics of the curved dimming glass. A greater value of the curved-surface function ⊖ indicates a more complex curved surface. The curved-surface function ⊖ is defined as follows: among the curvature R of sections taken along any cross-sectional line passing through the centroid of the curved dimming glass and extending through the stacked structure thereof, the maximum curvature R is referred as Rₘₐₓ, and the minimum curvature R is referred as Rₘᵢₙ. When Rₘₐₓ > 0 and Rₘᵢₙ = 0, the curved-surface function ⊖ = Rₘₐₓ / 2, as in the case of a single-curved surface. In this case, Rₘₐₓ ranges from 40 mm/m to 600 mm/m, preferably from 70 mm/m to 500 mm/m. When Rₘₐₓ = Rₘᵢₙ > 0, the curved-surface function ⊖ = Rₘₐₓ, as in the case of an axisymmetric curved surface (e.g., a spherical surface). In this case, Rₘₐₓ ranges from 20 mm/m to 300 mm/m, preferably from 35 mm/m to 250 mm/m. When Rₘₐₓ > Rₘᵢₙ > 0, the curved-surface function ⊖ = (Rₘₐₓ + Rₘᵢₙ) / 2, as in the case of a double-curved surface or a complex curved surface. When Rₘₐₓ = Rₘᵢₙ = 0, ⊖ = 0, indicating a planar surface. The unit of the curved-surface function ⊖ is mm/m (millimeters per meter).

The above definitions of curvature R and curved-surface function ⊖ both disregard the thickness of the curved dimming glass. Specifically, the curvature R and curved-surface function ⊖ are calculated based on the concave or convex surface of any cross-section taken along a cross-sectional line passing through the centroid of the curved dimming glass and extending through the stacked structure thereof. In other words, the cross-sectional contour along the cross-sectional line is simplified as a line segment having no thickness.

The above definition of the curved-surface function ⊖ applies to cases where the curved dimming glass is located on the same side of the reference plane. For cases where the curved dimming glass extends on both sides of the reference plane, as shown in FIG. 6, the reference plane shall be used as a dividing plane to divide the curved dimming glass into two portions, and the curved-surface function ⊖ of each portion shall be calculated separately. The reference plane is the plane represented by the dashed straight line segment AB in FIGs. 4, 5, and 6.

The surface characteristics of curved surfaces are relatively complex. The curved-surface function ⊖ defined in the present disclosure is intended to provide a parameter to describe the surface characteristics simply and clearly.

Further, due to limitations in the processability of curved glass, the curved surfaces of manufactured curved dimming glass rarely have localized protrusions or depressions.

Further, in practical applications, in consideration of aesthetic requirements, curved dimming glass generally has a certain degree of symmetry, and the undulations of the curved surface are typically continuous and smooth.

Further, in practical applications, in consideration of cost-effectiveness and ease of processing, the curved surface of curved dimming glass is generally not very complex.

Further, for simple curved dimming glass, such as a hemispherical curved surface, the top view is circular, and the cross-sectional view in both the X-X direction and the Y-Y direction are circular arc segments (see FIG. 4), with Rₘₐₓ = Rₘᵢₙ > 0. Such a curved surface can be specifically described by the curved-surface function ⊖.

Further, for simple curved dimming glass, as shown in FIGs. 3 and 5, Rₘₐₓ = Rₘᵢₙ > 0. Such a curved surface can be specifically described by the curved-surface function ⊖.

Further, for certain simple curved surfaces, such as a single-curved surface, the top view is as shown in FIG. 3, the cross-sectional contour of the cross-sectional line along the X-X direction is a circular arc segment, as shown in FIG. 4, and the cross-sectional contour of the cross-sectional line along the Y-Y direction is a straight line, with α being 90°, and Rₘₐₓ > 0 and Rₘᵢₙ = 0. Such a curved surface can be specifically described by the curved-surface function ⊖.

Further, a single-curved surface has at least two planes of symmetry, and a spherical surface has infinitely many planes of symmetry. Since these have already been discussed above, they are not further categorized herein as simple curved surfaces having symmetry. For simple curved surfaces having symmetry, such as multi-curved surfaces having at least two planes of symmetry, the top schematic view may be rectangular, regular polygonal, or the like, and the cross-sectional contour of the cross-sectional line is a circular arc. Such curved surfaces are relatively common.

Further, specifically for double-curved automotive sunroof dimming glass, the top schematic view is generally approximately rectangular, and the closer to the middle of the sunroof dimming glass, the greater the raised height thereof. For such curved automotive sunroof dimming glass, in order to describe the surface characteristics more simply and clearly, the calculation method of the curved-surface function ⊖ may be further simplified. Specifically, the curvature R is calculated based on cross-sections taken along two mutually perpendicular cross-sectional lines that are parallel to any two sides of the rectangle, pass through the centroid of the curved dimming glass, and extend through the laminated structure thereof. Such a method provides a simple and clear description of the surface characteristics. The curvature R of the cross-section along the X-X direction is denoted as R_{X-X}, and the curvature R of the cross-section along the Y-Y direction is denoted as R_{Y-Y}. In the specific embodiments of the present disclosure, this simplified method is used to describe the surface characteristics of double-curved automotive sunroof dimming glass. In general, for double-curved automotive sunroof dimming glass, both R_{X-X} and R_{Y-Y} are greater than 0, and thus the curved-surface function ⊖ = (R_{X-X} + R_{Y-Y}) / 2. The X-X direction refers to the forward and backward direction of the vehicle, and the Y-Y direction refers to the width direction of the vehicle body. Generally, the curvature R of the cross-section along the X-X direction is greater than that along the Y-Y direction.

It can be seen from the above definition of the curved-surface function ⊖ that, when the curved-surface function ⊖ is the same, the dimming glass of a single-curved surface is more curved than that of a double-curved surface. As is well known, it is more difficult for double-curved dimming glass than single-curved dimming glass to avoid wrinkling problems. Therefore, it is apparent that using the curved-surface function ⊖ defined in the present disclosure to represent surface characteristics is more reasonable than using a single curvature R. The fundamental reason is that the curved-surface function ⊖ takes into account the case of double-curved surfaces while also accommodating more complex curved surfaces, that is, the curved-surface function ⊖ fully reflects the characteristic that automotive sunroof dimming glass is basically double-curved.

In the present disclosure, the definitions of curvature R and curved-surface function ⊖ for curved glass, curved dimming film, an upper forming mold, a lower forming mold, an upper shaping mold, and a lower shaping mold are the same as those for the curved dimming glass, and thus are not repeated herein.

If the curved surfaces of the curved dimming film and the curved glass are similar surfaces, that is, the curves of sections along any corresponding cross-sectional lines on the curved surfaces are similar curves, then the curved dimming film and the curved glass are in an ideal fitting state. However, such perfect fitting is not required in the present disclosure. In the method for preparing the curved dimming glass according to the present disclosure, a curved dimming film having a curved-surface function ⊖ ranging from 20 mm/m to 300 mm/m and capable of fitting with the curved glass is provided. As is well known, the area of the curved dimming film should match that of the curved glass. It is apparent from the definition of the curved-surface function ⊖ in the present disclosure that, even when two curved surfaces have the same curved-surface function ⊖, their surface areas may be different. The fit described in the present disclosure has three aspects, which must be satisfied simultaneously: (1) the area of the curved dimming film is comparable to that of the curved glass, so as to meet the general requirements for dimming glass; (2) the curved-surface function ⊖ of the curved dimming film ranges from 20 mm/m to 300 mm/m; and (3) in a section of a cross-sectional line at the same stacked position, the ratio of curvature R of the curved glass to curvature R of the corresponding curved dimming film ranges from 0.7 to 1.3. The measurement method is as follows: the curved glass and the curved dimming film are each equally divided into 25 sections along corresponding cross-sectional lines, and the ratio of the curvature R of the curved glass to the curvature R of the corresponding curved dimming film is calculated for each section. Among the resulting 25 ratio values, the minimum value and the maximum value are taken as the starting value and the ending value, respectively, and are defined as the range of the ratio of curvature R of sections of the cross-sectional line at same stacked position for the curved glass and the corresponding curved dimming film.

In the present disclosure, the method for measuring the ratio of curvature R of the section of the cross-sectional line at same stacked position for the upper forming mold and the lower forming mold, and the method for measuring the ratio of curvature R of the section of the cross-sectional line at same stacked position for the upper shaping mold and the lower shaping mold, are the same as the method for measuring the ratio of the curvature R of the curved glass to the corresponding curved dimming film in the preparation of the curved dimming glass, and thus are not repeated herein.

In the present disclosure, all sections along the cross-sectional lines pass through the centroids of the curved dimming glass, the curved dimming film, the upper forming mold, the lower forming mold, the upper shaping mold, and the lower shaping mold.

In the present disclosure, after a planar dimming film is sequentially subjected to pulse thermal shock and hot-press forming, the dimming performance T of the curved dimming film is measured as follows: 16 points are uniformly selected on each square meter of the curved dimming film, and the visible light transmittance at each of the 16 points without applying a power supply is measured and recorded as Toff1 to Toff16. Then, a corresponding operating power supply is applied to the curved dimming film, and the visible light transmittance at each of the 16 points is measured and recorded as Ton1 to Ton16. The ΔT value for each point is then calculated, for example, ΔT1 = Ton1 - Toff1, and so on. The maximum ΔT value is denoted as ΔTₘₐₓ, and the minimum ΔT value is denoted as ΔTₘᵢₙ. The dimming performance T is defined as: T = (ΔT1 + ΔT2 + ΔT3 + ... + ΔT16) / 16. The measurement method for the dimming uniformity U of the curved dimming film is as follows: U = (ΔTₘₐₓ - ΔTₘᵢₙ) / T, where U ≤ 5% is regarded as "normal," and U > 5% is regarded as "abnormal." The selection of 16 uniformly distributed test points per square meter of the curved dimming film for measuring and calculating the dimming performance T and the dimming uniformity U is not a mandatory requirement. If the area of the curved dimming film is smaller or larger, the number of selected test points may be adjusted, so long as the selected points are sufficient to demonstrate the performance of the curved dimming film. It is apparent that at least two test points are required. The operating power supplies for different curved dimming films are not the same. For example, suspended particle curved dimming films are generally connected to 110 V, 60 Hz alternating current; polymer dispersed liquid crystal curved dimming films are generally connected to 60 V, 60 Hz alternating current; and electrochromic curved dimming films are generally connected to 3 V direct current. The specific operating power supply is selected according to the product requirements of the planar dimming film.

In the present disclosure, the methods for measuring the dimming performance T and the dimming uniformity U of the curved dimming glass are the same as those for the curved dimming film, and thus are not repeated herein.

In the present disclosure, the concepts of the upper forming mold and the lower forming mold merely indicate the relative positional relationship of the molds and are not limiting conditions. The relationship is not necessarily an upper-lower relationship, and may also be a front-rear, left-right, or other positional relationship. Similarly, the concepts of the upper shaping mold and the lower shaping mold merely indicate the relative positional relationship of the mold and are not limiting conditions. The relationship is not necessarily an upper-lower relationship, and may also be a front-rear, left-right, or other positional relationship. On this basis, the lower forming mold and/or the lower shaping mold has dense vacuum extraction channels with a pore diameter of 2 mm or less. Alternatively, the upper forming mold and/or the upper shaping mold has dense vacuum extraction channels with a pore diameter of 2 mm or less. However, both corresponding molds shall not simultaneously have dense vacuum extraction channels.

The present disclosure is further described below with reference to examples.

### [Example 1] A double-curved dimming film

A planar suspended particle device dimming film was subjected to pulse thermal shock and hot-press forming. In the hot-press forming, the curved-surface function ⊖ of the upper forming mold and the lower forming mold was 40 mm/m, and the transfer duration from the pulse thermal shock step to the hot-press forming step was 50 seconds, thereby obtaining a curved dimming film having a curved-surface function ⊖ of 35 mm/m. As shown in FIG. 1, the curved dimming film was in an approximately rectangular shape; and as shown in FIG. 4, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 2] A double-curved dimming film

A planar suspended particle device dimming film was subjected to pulse thermal shock and hot-press forming. In the hot-press forming, the curved-surface function ⊖ of the upper forming mold and the lower forming mold was 83 mm/m, and the transfer duration from the pulse thermal shock step to the hot-press forming step was 40 seconds, thereby obtaining a curved dimming film having a curved-surface function ⊖ of 76 mm/m. As shown in FIG. 1, the curved dimming film was in an approximately rectangular shape; and as shown in FIG. 4, the cross-sectional contours of the cross-sectional lines in the X-X and Y-Y directions were approximately circular arcs. The dimming performance T and dimming uniformity U thereof were tested, and the specific parameters are shown in Table 1.

### [Example 3] A double-curved dimming film

A planar suspended particle device dimming film was subjected to pulse thermal shock and hot-press forming. In the hot-press forming, the curved-surface function ⊖ of the upper forming mold and the lower forming mold was 168 mm/m, and the transfer duration from the pulse thermal shock step to the hot-press forming step was 30 seconds, thereby obtaining a curved dimming film having a curved-surface function ⊖ of 150 mm/m. As shown in FIG. 1, the curved dimming film was in an approximately rectangular shape; and as shown in FIG. 4, the cross-sectional contours of the cross-sectional lines in the X-X and Y-Y directions were approximately parabolic curves. The dimming performance T and dimming uniformity U thereof were tested, and the specific parameters are shown in Table 1.

### [Example 4] A double-curved dimming film

A planar electrochromic dimming film was subjected to pulse thermal shock and hot-press forming. In the hot-press forming, the curved-surface function ⊖ of the upper forming mold and the lower forming mold was 85 mm/m, and the transfer duration from the pulse thermal shock step to the hot-press forming step was 50 seconds, thereby obtaining a curved dimming film having a curved-surface function ⊖ of 71 mm/m. As shown in FIG. 1, the curved dimming film was in an approximately rectangular shape; and as shown in FIG. 4, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 5] A double-curved dimming film

A planar electrochromic dimming film was subjected to pulse thermal shock and hot-press forming. In the hot-press forming, the curved-surface function ⊖ of the upper forming mold and the lower forming mold was 55 mm/m, and the transfer duration from the pulse thermal shock step to the hot-press forming step was 50 seconds, thereby obtaining a curved dimming film having a curved-surface function ⊖ of 48 mm/m. As shown in FIG. 1, the curved dimming film was in an approximately rectangular shape; and as shown in FIG. 4, the cross-sectional contours of the cross-sectional lines in the X-X and Y-Y directions were approximately circular arcs. The dimming performance T and dimming uniformity U thereof were tested, and the specific parameters are shown in Table 1.

### [Example 6] A double-curved dimming film

A planar electrochromic dimming film was subjected to pulse thermal shock and hot-press forming. In the hot-press forming, the curved-surface function ⊖ of the upper forming mold and the lower forming mold was 285 mm/m, and the transfer duration from the pulse thermal shock step to the hot-press forming step was 10 seconds, thereby obtaining a curved dimming film having a curved-surface function ⊖ of 262 mm/m. As shown in FIG. 1, the curved dimming film was in an approximately rectangular shape; and as shown in FIG. 4, the cross-sectional contours of the cross-sectional lines in the X-X and Y-Y directions were approximately parabolic curves. The dimming performance T and dimming uniformity U thereof were tested, and the specific parameters are shown in Table 1.

### [Example 7] A double-curved dimming film

A planar polymer dispersed liquid crystal dimming film was subjected to pulse thermal shock and hot-press forming. In the hot-press forming, the curved-surface function ⊖ of the upper forming mold and the lower forming mold was 30 mm/m, and the transfer duration from the pulse thermal shock step to the hot-press forming step was 25 seconds, thereby obtaining a curved dimming film having a curved-surface function ⊖ of 26 mm/m. As shown in FIG. 1, the curved dimming film was in an approximately rectangular shape; and as shown in FIG. 4, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 8] A double-curved dimming film

A planar polymer dispersed liquid crystal dimming film was subjected to pulse thermal shock and hot-press forming. In the hot-press forming, the curved-surface function ⊖ of the upper forming mold and the lower forming mold was 204 mm/m, and the transfer duration from the pulse thermal shock step to the hot-press forming step was 5 seconds, thereby obtaining a curved dimming film having a curved-surface function ⊖ of 185 mm/m. As shown in FIG. 1, the curved dimming film was in an approximately rectangular shape; and as shown in FIG. 4, the cross-sectional contours of the cross-sectional lines in the X-X and Y-Y directions were approximately circular arcs. The dimming performance T and dimming uniformity U thereof were tested, and the specific parameters are shown in Table 1.

### [Example 9] A double-curved dimming film

A planar polymer dispersed liquid crystal dimming film was subjected to pulse thermal shock, hot-press forming, and cold shock shaping, thereby obtaining a curved dimming film having a curved-surface function ⊖ of 290 mm/m. The cold shock shaping conditions were as follows: a temperature of 20°C, a gauge pressure of 0.5 MPa, and treatment in the mold for a duration of 150 seconds. In the hot-press forming, the curved-surface function ⊖ of the upper forming mold and the lower forming mold was 295 mm/m; and in the cold shock shaping, the curved-surface function ⊖ of the upper shaping mold and the lower shaping mold was 295 mm/m. The transfer duration from the pulse thermal shock step to the hot-press forming step was 10 seconds, and the transfer duration from the hot-press forming step to the cold shock shaping step was 10 seconds. As shown in FIG. 1, the curved dimming film was in an approximately rectangular shape; and as shown in FIG. 4, the cross-sectional contours of the cross-sectional lines in the X-X and Y-Y directions were approximately elliptical arcs. The dimming performance T and dimming uniformity U thereof were tested, and the specific parameters are shown in Table 1.

### [Example 10] A double-curved automotive sunroof dimming glass

The curved dimming film of [Example 1], an EVA film, and ordinary clear glass were used, wherein the curved-surface function ⊖ was 35 mm/m.

The layers were layered according to the structure of the dimming glass, and lamination was performed in an autoclave. The lamination conditions were as follows: a temperature of 110°C, vacuuming for 10 minutes, gradual pressurization to 450 kPa, and holding for 60 minutes.

A curved dimming glass was prepared. The dimming glass had a normal appearance without wrinkles. The dimming performance T and dimming uniformity U thereof were tested, and the specific parameters are shown in Table 2.

### [Example 11] A double-curved automotive sunroof dimming glass

The method was same as [Example 10], except that the curved dimming film of [Example 1] was replaced with the curved dimming film of Example 2, the EVA film was replaced with a PVB film, and the ordinary clear glass was replaced with brown glass, wherein the curved-surface function ⊖ was 70 mm/m. The dimming performance T and dimming uniformity U thereof were tested, and the specific parameters are shown in Table 2.

### [Example 12] A double-curved automotive sunroof dimming glass

The method was same as [Example 10], except that the curved dimming film of [Example 1] was replaced with the curved dimming film of [Example 3], the EVA film was replaced with a TPU film, and the ordinary clear glass was replaced with PC sheet, wherein the curved-surface function ⊖ was 155 mm/m. The dimming performance T and dimming uniformity U thereof were tested, and the specific parameters are shown in Table 2.

### [Example 13] A double-curved automotive sunroof dimming glass

The method was same as [Example 10], except that the curved dimming film of [Example 1] was replaced with the curved dimming film of [Example 4] and the ordinary clear glass had a curved-surface function ⊖ of 71 mm/m. The dimming performance T and dimming uniformity U thereof were tested, and the specific parameters are shown in Table 2.

### [Example 14] A double-curved automotive sunroof dimming glass

The method was same as [Example 10], except that the curved dimming film of [Example 1] was replaced with the curved dimming film of [Example 5], the EVA film was replaced with a PVB film, and the ordinary clear glass was replaced with IR-blocking glass, wherein the curved-surface function ⊖ was 50 mm/m. The dimming performance T and dimming uniformity U thereof were tested, and the specific parameters are shown in Table 2.

### [Example 15] A double-curved automotive sunroof dimming glass

The method was same as [Example 10], except that the curved dimming film of [Example 1] was replaced with the curved dimming film of [Example 6], the EVA film was replaced with a TPU film, and the ordinary clear glass was replaced with a PC sheet, wherein the curved-surface function ⊖ was 265 mm/m. The dimming performance T and dimming uniformity U thereof were tested, and the specific parameters are shown in Table 2.

### [Example 16] A double-curved automotive sunroof dimming glass

The method was same as [Example 10], except that the curved dimming film of [Example 1] was replaced with the curved dimming film of [Example 7], and the ordinary clear glass had a curved-surface function ⊖ of 30 mm/m. The dimming performance T and dimming uniformity U thereof were tested, and the specific parameters are shown in Table 2.

### [Example 17] A double-curved automotive sunroof dimming glass

The method was same as [Example 10], except that the curved dimming film of [Example 1] was replaced with the curved dimming film of [Example 8], the EVA film was replaced with a PVB film, and the ordinary clear glass was replaced with a PMMA sheet, wherein the curved-surface function ⊖ was 180 mm/m. The dimming performance T and dimming uniformity U thereof were tested, and the specific parameters are shown in Table 2.

### [Example 18] A double-curved automotive sunroof dimming glass

The method was same as [Example 10], except that the curved dimming film of [Example 1] was replaced with the curved dimming film of [Example 9], the EVA film was replaced with a TPU film, and the ordinary clear glass was replaced with a PC sheet, wherein the curved-surface function ⊖ was 290 mm/m. The dimming performance T and dimming uniformity U thereof were tested, and the specific parameters are shown in Table 2.

### [Example 19] A double-curved dimming film

The method was same as [Example 3], except that the curved dimming film after pulse thermal shock and hot-press forming was rapidly placed into a cold shock shaping mold and treated in the mold at 30°C under a gauge pressure of 0.5 MPa for 100 seconds, wherein the curved-surface function ⊖ of the upper shaping mold and the lower shaping mold for the cold shock shaping was 168 mm/m.

### [Example 20] A double-curved dimming film

The method was same as [Example 6], except that the curved dimming film after pulse thermal shock and hot-press forming was rapidly placed into a cold shock shaping mold and treated in the mold at 10°C under a gauge pressure of 1.0 MPa for 200 seconds, wherein the curved-surface function ⊖ of the upper shaping mold and the lower shaping mold for the cold shock shaping was 285 mm/m.

### [Example 21] A double-curved dimming film

The method was same as [Example 3], except that the curved-surface function ⊖ of the upper forming mold and the lower forming mold for the hot-press forming was 22 mm/m, thereby obtaining a curved dimming film having a curved-surface function ⊖ of 20 mm/m.

### [Example 22] A double-curved dimming film

The method was same as [Example 3], except that the curved-surface function ⊖ of the upper forming mold and the lower forming mold for the hot-press forming was 15 mm/m, thereby obtaining a curved dimming film having a curved-surface function ⊖ of 14 mm/m.

### [Example 23] A double-curved dimming film

The method was same as [Example 3], except that the curved-surface function ⊖ of the upper forming mold and the lower forming mold for the hot-press forming was 5 mm/m, thereby obtaining a curved dimming film having a curved-surface function ⊖ of 4 mm/m.

### [Example 24] A double-curved dimming film

The method was same as [Example 19], except that the curved-surface function ⊖ of the upper forming mold and the lower forming mold for the hot-press forming, and the curved-surface function ⊖ of the upper shaping mold and the lower shaping mold for the cold shock shaping were both 5 mm/m, thereby obtaining a curved dimming film having a curved-surface function ⊖ of 5 mm/m.

### [Example 25] A double-curved dimming film

The method was same as [Example 19], except that the curved-surface function ⊖ of the upper forming mold and the lower forming mold for the hot-press forming and the curved-surface function ⊖ of the upper shaping mold and the lower shaping mold for the cold shock shaping were both 3 mm/m, thereby obtaining a curved dimming film having a curved-surface function ⊖ of 3 mm/m.

### [Comparative Example 1] A double-curved dimming film

The method was same as [Example 2], except that the pulse thermal shock time in the first step was changed from 3 seconds to 100 seconds, and a curved dimming film having a curved-surface function ⊖ of 76 mm/m was obtained. The dimming performance T and dimming uniformity U thereof were tested. Since the pulse thermal shock time in the first step exceeded 60 seconds and reached 100 seconds, the dimming performance T of the curved dimming film was attenuated to only 15.6%, and the dimming uniformity U was abnormal. The specific parameters are shown in Table 1.

### [Comparative Example 2] A double-curved dimming film

The method was same as [Example 3], except that the hot-press forming temperature in the second step was changed from 120°C to 30°C, and a curved dimming film having a curved-surface function ⊖ of 20 mm/m was obtained. The dimming performance T and dimming uniformity U thereof were tested. Since the hot-press forming temperature in the second step was lower than 50°C and was only 30°C, the curved-surface function ⊖ of the prepared curved dimming film was too small and was only 18 mm/m. The specific parameters are shown in Table 1.

### [Comparative Example 3] A double-curved dimming film

The method was same as [Example 4], except that the pulse thermal shock temperature in the first step was changed from 250°C to 80°C, and a curved dimming film having a curved-surface function ⊖ of 19 mm/m was obtained. The dimming performance T and dimming uniformity U thereof were tested. Since the pulse thermal shock temperature in the first step was lower than 120°C and was only 80°C, the curved-surface function ⊖ of the prepared curved dimming film was too small and was only 19 mm/m. The specific parameters are shown in Table 1.

### [Comparative Example 4] A double-curved dimming film

The method was same as [Example 5], except that the hot-press forming time in the second step was changed from 25 seconds to 125 seconds, and a curved dimming film having a curved-surface function ⊖ of 48 mm/m was obtained. The dimming performance T and dimming uniformity U thereof were tested. Since the hot-press forming time in the second step exceeded 90 seconds and reached 125 seconds, the dimming performance T of the curved dimming film was attenuated to only 10.1%, and the dimming uniformity U was abnormal. The specific parameters are shown in Table 1.

### [Comparative Example 5] A double-curved dimming film

The method was same as [Example 7], except that the gauge pressure during the hot-press forming in the second step was changed from 0.4 MPa to 2.0 MPa, and a curved dimming film having a curved-surface function ⊖ of 26 mm/m was obtained. The dimming performance T and dimming uniformity U thereof were tested. Since the gauge pressure during the second step of hot-press forming exceeded 1.5 MPa and reached 2.0 MPa, the dimming performance T of the curved dimming film was attenuated to only 12.1%, and the dimming uniformity U was abnormal. The specific parameters are shown in Table 1.

### [Comparative Example 6] A double-curved dimming film

The method was same as [Example 8], except that the pulse thermal shock temperature in the first step was changed from 240°C to 300°C, and a curved dimming film having a curved-surface function ⊖ of 195 mm/m was obtained. The dimming performance T and dimming uniformity U thereof were tested. Since the pulse thermal shock temperature in the first step exceeded 280°C and reached 300°C, the dimming performance T of the curved dimming film was attenuated to only 17.6%, and the dimming uniformity U was abnormal. The specific parameters are shown in Table 1.

### [Comparative Example 7] A double-curved dimming film

The method was same as [Example 3], except that the first step of pulse thermal shock was omitted. The dimming performance T and dimming uniformity U thereof were tested. The specific parameters are shown in Table 1. Since the first step of pulse thermal shock was absent, the obtained curved-surface function ⊖ was too small, only 13 mm/m.

### [Comparative Example 8] A double-curved dimming film

The method was same as [Example 3], except that the first step of pulse thermal shock was omitted and the hot-press forming temperature in the second step was 280°C. The dimming performance T and dimming uniformity U thereof were tested. The specific parameters are shown in Table 1. Since the first step of pulse thermal shock was absent and the hot-press forming temperature in the second step was too high, the dimming performance T of the curved dimming film was attenuated to only 15.3%, and the dimming uniformity U was abnormal.

### [Comparative Example 9] A flat dimming glass

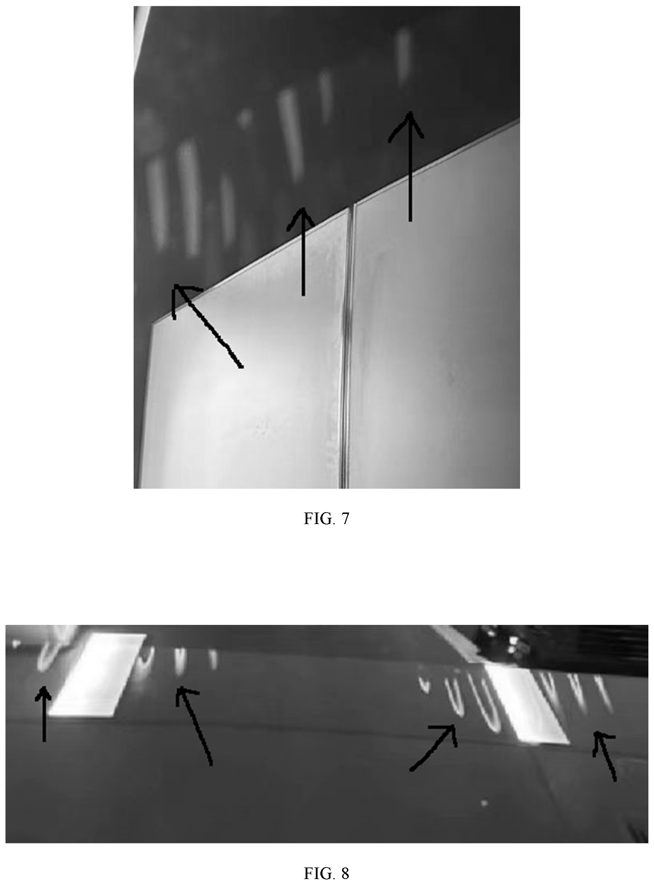

The method was same as [Example 10], except that the ordinary clear glass was replaced with a flat glass (curved-surface function ⊖ is 0 mm/m). The dimming performance T and dimming uniformity U thereof were tested, and the specific parameters are shown in Table 2. Wrinkles were observed at the edges of the dimming glass, as shown in FIG. 7, with arrows indicating the wrinkles. It can be seen that using flat glass with a curved dimming film to prepare dimming glass easily causes wrinkling.

### [Comparative Example 10] A double-curved dimming glass

The method was same as [Example 10], except that the curved dimming film in [Example 1] was replaced with a planar dimming film (curved-surface function ⊖ is 0 mm/m). The dimming performance T and dimming uniformity U were tested, with specific parameters shown in Table 2. The edges of the dimming glass exhibit obvious wrinkles, as shown in FIG. 8, where the arrows indicate the wrinkles. It can be seen that using a planar dimming film with curved glass tends to generate wrinkles in the obtained dimming glass.

### [Comparative Example 11] A double-curved dimming glass

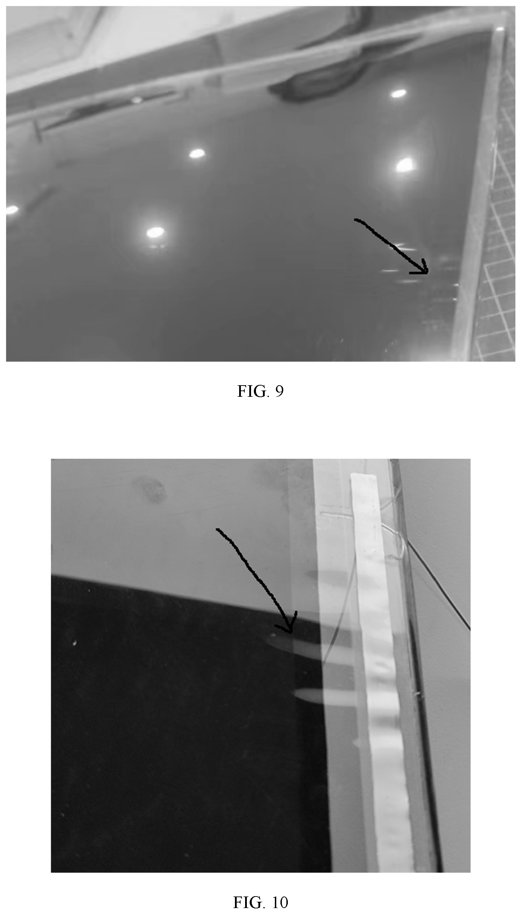

The method was same as [Example 10], except that the ordinary clear glass had a curved-surface function ⊖ of 50 mm/m, and the ratio of curvature R of curved glass / curved dimming film ranged from 1.10 to 1.63. The dimming performance T and dimming uniformity U were tested, with specific parameters shown in Table 2. The edges of the dimming glass exhibit obvious wrinkles, as shown in FIG. 9, where the arrows indicate the wrinkles. It can be seen that when the ratio of curvature R of curved glass / curved dimming film exceeded the range of 0.7-1.3, wrinkles were prone to exist.

### [Comparative Example 12] A double-curved dimming glass

The method was same as [Example 10], except that the ordinary clear glass had a curved-surface function ⊖ of 50 mm/m, and the curved dimming film had a curved-surface function ⊖ of 80 mm/m, and the ratio of curvature R of curved glass / curved dimming film ranged from 0.45 to 0.81. The dimming performance T and dimming uniformity U were tested, with specific parameters shown in Table 2. The edges of the dimming glass exhibit obvious wrinkles, as shown in FIG. 10, where the arrows indicate the wrinkles. It can be seen that when the ratio of curvature R of curved glass / curved dimming film exceeded the range of 0.7-1.3, wrinkles were prone to exist.

**Table 1 Parameters of curved dimming film**

| Examples | Planar dimming film | First step of pulse thermal shock | | Second step of hot-press forming | | |
|---|---|---|---|---|---|---|
| | | Temperature °C | Time s | Temperature °C | Gauge pressure MPa | Time s |
| Example 1 | Suspended particle device dimming film | 150 | 50 | 120 | 1.2 | 30 |
| Example 2 | Suspended particle device dimming film | 280 | 3 | 50 | 1.0 | 70 |
| Example 3 | Suspended particle device dimming film | 200 | 15 | 120 | 0.2 | 40 |
| Example 4 | Electrochromic dimming film | 250 | 40 | 80 | 0.6 | 80 |
| Example 5 | Electrochromic dimming film | 210 | 20 | 140 | 0.5 | 25 |
| Example 6 | Electrochromic dimming film | 200 | 60 | 180 | 1.5 | 5 |
| Example 7 | Polymer dispersed liquid crystal dimming film | 180 | 40 | 100 | 0.4 | 10 |
| Example 8 | Polymer dispersed liquid crystal dimming film | 240 | 30 | 90 | 1.0 | 20 |
| Example 9 | Polymer dispersed liquid crystal dimming film | 260 | 15 | 50 | 0.8 | 90 |
| Example 19 | Suspended particle device dimming film | 200 | 15 | 120 | 0.2 | 40 |
| Example 20 | Electrochromic dimming film | 200 | 60 | 180 | 1.5 | 5 |
| Example 21 | Suspended particle device dimming film | 200 | 15 | 120 | 0.2 | 40 |
| Example 22 | Suspended particle device dimming film | 200 | 15 | 120 | 0.2 | 40 |
| Example 23 | Suspended particle device dimming film | 200 | 15 | 120 | 0.2 | 40 |
| Example 24 | Suspended particle device dimming film | 200 | 15 | 120 | 0.2 | 40 |
| Example 25 | Suspended particle device dimming film | 200 | 15 | 120 | 0.2 | 40 |
| Comparati ve Example 1 | Suspended particle device dimming film | 280 | 100 | 50 | 1.0 | 70 |
| Comparative Example 2 | Suspended particle device dimming film | 200 | 15 | 30 | 0.2 | 40 |
| Comparative Example 3 | Electrochromic dimming film | 80 | 40 | 80 | 0.6 | 80 |
| Comparative Example 4 | Electrochromic dimming film | 210 | 20 | 140 | 0.5 | 125 |
| Comparative Example 5 | Polymer dispersed liquid crystal dimming film | 180 | 40 | 100 | 2.0 | 10 |
| Comparative Example 6 | Polymer dispersed liquid crystal dimming film | 300 | 30 | 90 | 1.0 | 20 |
| Comparative Example 7 | Suspended particle device dimming film | X | X | 120 | 0.2 | 40 |
| Comparative Example 8 | Suspended particle device dimming film | X | X | 280 | 0.2 | 40 |

**Table 1 Parameters of curved dimming film (Continued table)**

| Examples | Curved dimming film mm/m | | | Cₘₐₓ | T | U |
|---|---|---|---|---|---|---|
| | Rx-x | R_{Y-Y} | Θ | % | | |
| Example 1 | 40 | 30 | 35 | 4.8 | 51.2% | Normal |
| Example 2 | 80 | 72 | 76 | 7.1 | 53.4% | Normal |
| Example 3 | 150 | 150 | 150 | 8.1 | 50.7% | Normal |
| Example 4 | 80 | 62 | 71 | 8.9 | 53.2% | Normal |
| Example 5 | 50 | 46 | 48 | 4.4 | 52.6% | Normal |
| Example 6 | 264 | 260 | 262 | 7.8 | 53.4% | Normal |
| Example 7 | 26 | 26 | 26 | 3.7 | 55.0% | Normal |
| Example 8 | 190 | 180 | 185 | 7.9 | 54.3% | Normal |
| Example 9 | 300 | 280 | 290 | 5.8 | 50.9% | Normal |
| Example 19 | 165 | 159 | 162 | 6.2 | 50.9% | Normal |
| Example 20 | 275 | 277 | 276 | 5.8 | 51.8% | Normal |
| Example 21 | 20 | 20 | 20 | 4.1 | 50.8% | Normal |
| Example 22 | 15 | 13 | 14 | 3.8 | 50.3% | Normal |
| Example 23 | 4 | 4 | 4 | 1.2 | 51.2% | Normal |
| Example 24 | 5 | 5 | 5 | 1.5 | 51.0% | Normal |
| Example 25 | 3 | 3 | 3 | 1.0 | 50.7% | Normal |
| Comparative Example 1 | 82 | 70 | 76 | 11.1 | 15.6% | Abnormal |
| Comparative Example 2 | 18 | 18 | 18 | 2.7 | 51.8% | Normal |
| Comparative Example 3 | 20 | 18 | 19 | 3.5 | 52.4% | Normal |
| Comparative Example 4 | 52 | 44 | 48 | 4.4 | 10.1% | Abnormal |
| Comparative Example 5 | 26 | 26 | 26 | 7.4 | 12.1% | Abnormal |
| Comparative Example 6 | 206 | 204 | 195 | 12.5 | 17.6% | Abnormal |
| Comparative Example 7 | 13 | 13 | 13 | 2.1 | 52.4% | Normal |
| Comparative Example 8 | 156 | 144 | 150 | 8.5 | 15.3% | Abnormal |

| | | | | | | |
|---|---|---|---|---|---|---|
| Note: X indicates that it is not applicable. | | | | | | |

**Table 2 Parameters of curved dimming glass**

| Example | Dimming film | Interlayer | Range of glass R/ dimming film R | Transparent glass | | Dimming glass | | |
|---|---|---|---|---|---|---|---|---|
| | | | | Type | ⊖ | Wrinkles | T | U |
| Example 10 | Example 1 | EVA | 0.85~1.20 | Ordinary clear glass | 35 | Absent | 49.2 % | Normal |
| Example 11 | Example 2 | PVB | 0.70~1.15 | Brown glass | 70 | Absent | 31.4 % | Normal |
| Example 12 | Example 3 | TPU | 0.91~1.20 | PC sheet | 15 5 | Absent | 48.7 % | Normal |
| Example 13 | Example 4 | EVA | 0.92~1.30 | Ordinary clear glass | 71 | Absent | 51.1 % | Normal |
| Example 14 | Example 5 | PVB | 1.00~1.20 | IR-block glass | 50 | Absent | 48.5 % | Normal |
| Example 15 | Example 6 | TPU | 0.76~1.26 | PC sheet | 26 5 | Absent | 49.3 % | Normal |
| Example 16 | Example 7 | EVA | 0.92~1.28 | Ordinary clear glass | 30 | Absent | 51.0 % | Normal |
| Example 17 | Example 8 | PVB | 0.83~1.11 | PMMA sheet | 18 0 | Absent | 50.0 % | Normal |
| Example 18 | Example 9 | TPU | 0.90~1.13 | PC sheet | 29 0 | Absent | 48.7 % | Normal |
| Comparative Example 9 | Example 1 | EVA | X | Ordinary clear glass | 0 | Present | 48.7 % | Normal |
| Comparative Example 10 | Planar dimming film | EVA | X | Ordinary clear glass | 35 | Present | 49.0 % | Normal |
| Comparative Example 11 | Example 1 | EVA | 1.10~1.63 | Ordinary clear glass | 50 | Present | 47.9 % | Normal |
| Comparative Example 12 | Example 1 | EVA | 0.45~0.81 | Ordinary clear glass | 50 | Present | 48.2 % | Normal |

| | | | | | | | | |
|---|---|---|---|---|---|---|---|---|
| Note: X indicates that it is not applicable. | | | | | | | | |

As shown in Table 1, comparison between [Comparative Example 1] and [Example 2] indicates that extending the pulse thermal shock duration in the first step from 3 seconds to 100 seconds causes attenuation of the dimming performance T of the curved dimming film to only 15.6%, and results in abnormal dimming uniformity U and curved dimming film is local non-uniform. Comparison between [Comparative Example 2] and [Example 3] indicates that reducing the hot-press forming temperature in the second step from 120°C to 30°C causes the curved-surface function ⊖ of the curved dimming film to be lower than 20 mm/m, specifically only 18 mm/m. Comparison between [Comparative Example 3] and [Example 4] indicates that reducing the pulse thermal shock temperature in the first step from 250°C to 80°C causes the curved-surface function ⊖ of the curved dimming film to be lower than 20 mm/m, specifically only 19 mm/m. Comparison between [Comparative Example 4] and [Example 5] indicates that extending the hot-press forming time in the second step from 25 seconds to 125 seconds causes attenuation of the dimming performance T of the curved dimming film to only 10.1%, and results in abnormal dimming uniformity U and curved dimming film is local non-uniform. Comparison between [Comparative Example 5] and [Example 7] indicates that increasing the gauge pressure of hot-press forming in the second step from 0.4 MPa to 2.0 MPa causes attenuation of the dimming performance T of the curved dimming film to only 12.1%, and results in abnormal dimming uniformity U and curved dimming film is local non-uniform. Comparison between [Comparative Example 6] and [Example 8] indicates that increasing the pulse thermal shock temperature in the first step from 240°C to 300°C causes attenuation of the dimming performance T of the curved dimming film to only 17.6%, and results in abnormal dimming uniformity U and curved dimming film is local non-uniform. Comparison between [Comparative Example 7] and [Example 3] indicates that without the first step of pulse thermal shock, the resulting curved dimming film has a relatively low curved-surface function ⊖ of only 13 mm/m. Comparison between [Comparative Example 8] and [Example 3] indicates that without the first step of pulse thermal shock, and with the second step of hot-press forming temperature increased to 280°C, the resulting curved dimming film has a normal curved-surface function ⊖; however, due to the excessively high temperature in the second step of hot-press forming, the dimming performance T of the curved dimming film is attenuated to only 15.3%, the dimming uniformity U is abnormal and curved dimming film is local non-uniform.

In view of above, during the pulse thermal shock and hot-press forming processes, each process parameter is critical. Without the first step of pulse thermal shock, it is difficult to prepare a curved dimming film having normal dimming performance T and dimming uniformity U, with a curved-surface function ⊖ ranging from 20 mm/m to 300 mm/m.

Comparison between [Example 3] and [Example 19], and between [Example 6] and [Example 20], indicates that by adding a cold shock shaping step, a curved dimming film having a slightly higher curved-surface function ⊖ can be prepared. This additional step can prevent the curved dimming film formed by hot-press shaping from springback deformation during the natural cooling process after release of the forming pressure at relatively high temperature, thereby avoiding a reduction in the curved-surface function ⊖.

As shown by the data in Table 2, comparison between [Comparative Example 9] and [Example 10] indicates that wrinkles are generated when planar glass is laminated with a curved dimming film to prepare planar dimming glass. Comparison between [Comparative Example 10] and [Example 10] indicates that wrinkles are generated when curved glass is laminated with a planar dimming film to prepare curved dimming glass. Comparison between [Comparative Examples 11-12] and [Examples 10-18] indicates that, during preparation of curved dimming glass, wrinkles are generated when the ratio of curvature R of curved glass/ curvature R of curved dimming film falls outside the range of 0.7-1.3.

In view of above, during the preparation of curved dimming glass, the curved dimming film needs to be used in combination with corresponding curved glass; in other words, the curved glass needs to be used in combination with a corresponding curved dimming film.

In the present disclosure, obvious differences exist in the dimming performance T of curved dimming glass prepared using the same type of curved dimming film. For example, the dimming performance T of [Example 1] is 49.2%, whereas that of [Example 2] is only 31.4%. This difference is caused by the different curved glass used during preparation of the curved dimming glass. As is well known, curved glass of different colors has different visible light transmittance values, and in some cases the differences may be significant. Of course, in certain application scenarios, curved dimming glass having a dimming performance T of greater than or equal to 5% can satisfy practical use requirements.

As shown in [Example 22] and [Example 23], by using the method for preparing a curved dimming film according to the present disclosure, a curved dimming film having a curved-surface function ⊖ of less than 20 mm/m can be prepared through pulse thermal shock and hot-press forming. The curved dimming film prepared in [Example 22] has a curved-surface function ⊖ of 15 mm/m, and the curved dimming film prepared in [Example 23] has a curved-surface function ⊖ of 4 mm/m.

As shown in [Example 24] and [Example 25], by using the method for preparing a curved dimming film according to the present disclosure, a curved dimming film having a curved-surface function ⊖ of less than 20 mm/m can also be prepared through pulse thermal shock, hot-press forming, and cold-shock shaping. The curved dimming film prepared in [Example 24] has a curved-surface function ⊖ of 5 mm/m, and the curved dimming film prepared in [Example 25] has a curved-surface function ⊖ of 3 mm/m.

It is apparent that the method for preparing a curved dimming film provided in the present disclosure is not limited to preparing a curved dimming film having a curved-surface function ⊖ ranging from 20 mm/m to 300 mm/m, but is also capable of preparing a curved dimming film having a curved-surface function ⊖ ranging from 0 mm/m to 300 mm/m. Although the starting point of the inventors was to solve the technical problem of preparing curved dimming films having relatively large curved-surface functions ⊖, the method provided herein can prepare curved dimming films having relatively large curved-surface functions ⊖, up to as high as 300 mm/m, and is likewise applicable to preparing curved dimming films having curved-surface functions ⊖ of less than 20 mm/m, low to 0 mm/m. In summary, the method for preparing a curved dimming film according to the present disclosure can prepare curved dimming films having a curved-surface function ⊖ ranging from 0 mm/m to 300 mm/m.

In summary, the curved dimming film and curved dimming glass provided in the present disclosure are prepared by using a technical solution in which a planar dimming film is subjected to pulse thermal shock and hot-press forming to prepare a curved dimming film having a predetermined curved-surface function ⊖, and further using the corresponding curved glass to prepare curved dimming glass. This can avoid the appearance defect of wrinkles in the dimming film that would occur when planar dimming film is used to prepare curved dimming glass, which is of great significance.

## Claims

1. A curved dimming film, comprising:
a first transparent substrate,
a first transparent conductive layer disposed on the first transparent substrate;
a second transparent substrate;
a second transparent conductive layer disposed on the second transparent substrate, wherein the first transparent conductive layer and the second transparent conductive layer are disposed opposite to each other; and
a dimming active layer disposed between the first transparent conductive layer and the second transparent conductive layer;
wherein the curved dimming film has a curved-surface function ⊖ ranging from 20 mm/m to 300 mm/m, and a dimming performance T of greater than or equal to 20%.

2. The curved dimming film according to claim 1, wherein the curved dimming film has a curved-surface function ⊖ ranging from 35 mm/m to 250 mm/m, and a dimming performance T of greater than or equal to 25%.

3. The curved dimming film according to claim 1, wherein the dimming active layer is at least one selected the group consisting of a suspended particle device dimming active layer, a polymer dispersed liquid crystal dimming active layer and an electrochromic dimming active layer.

4. The curved dimming film according to claim 1, wherein the first transparent substrate and the second transparent substrate are transparent plastic sheets.

5. The curved dimming film according to claim 1, wherein the first transparent conductive layer and the second transparent conductive layer are each independently one or more selected from the group consisting of an ITO conductive layer, an FZO conductive layer, an IZO conductive layer, a GZO conductive layer, an AZO conductive layer, a PEDOT conductive layer, a nano-Ag wire conductive layer, conductive graphene, a conductive polymer and a nano-Cu wire conductive layer.

6. The curved dimming film according to any one of claims 1 to 5, wherein the curved dimming film is suitable for manufacturing an automotive sunroof dimming glass.

7. The curved dimming film according to claim 1, wherein a cross-sectional contour of a cross-sectional line of the curved dimming film is at least one of a straight line, a circular arc, an elliptical arc, a parabola and an asymmetric curve.

8. A method for preparing a curved dimming film, comprising sequentially subjecting a planar dimming film to pulse thermal shock and hot-press forming to obtain the curved dimming film.

9. The method for preparing a curved dimming film according to claim 8, wherein the pulse thermal shock and the hot-press forming comprise:
a first step of pulse thermal shock, performing heating with a heating device at a temperature of 120°C to 280°C for 3 seconds to 60 seconds;
a second step of hot-press forming, treating in a mold at a temperature of 50°C to 180°C and a gauge pressure of 0.05MPa to 1.5MPa for 5 seconds to 90 seconds;
wherein the pulse thermal shock is performed at a temperature of at least 20°C higher than the temperature of hot-press forming.

10. The method for preparing a curved dimming film according to claim 8, wherein the pulse thermal shock and the hot-press forming comprise:
a first step of pulse thermal shock, performing heating with a heating device at a temperature of 130°C to 250°C for 4 seconds to 35 seconds;
a second step of hot-press forming, treating in a mold at a temperature of 80°C to 140°C and a gauge pressure of 0.2MPa to 1.2MPa for 10 seconds to 60 seconds;
wherein the pulse thermal shock is performed at a temperature of at least 30°C higher than the temperature of hot-press forming.

11. The method for preparing a curved dimming film according to claim 9, wherein the mold for the hot-press forming comprises an upper forming mold and a lower forming mold, and the upper forming mold and the lower forming mold have a curved-surface function ⊖ ranging from 20 mm/m to 300 mm/m.

12. The method for preparing a curved dimming film according to claim 9, wherein in a section of a cross-sectional line at the same stacked position, a ratio of curvature R of the upper forming mold to the lower forming mold ranges from 0.9 to 1.1.

13. The method for preparing a curved dimming film according to claim 11, wherein the heating temperature of the upper forming mold and the lower forming mold are independently controllable.

14. The method for preparing a curved dimming film according to claim 11, wherein an opposing surface of the upper forming mold and/or the lower forming mold has an uneven structure.

15. The method for preparing a curved dimming film according to claim 11, wherein the lower forming mold has dense vacuum extraction channels with a pore diameter of 2 mm or less.

16. The method for preparing a curved dimming film according to claim 8, wherein the curved dimming film has a curved-surface function ⊖ ranging from 20 mm/m to 300 mm/m, and a dimming performance T of greater than or equal to 20%.

17. The method for preparing a curved dimming film according to claim 8, wherein the curved dimming film has a curved-surface function ⊖ ranging from 35 mm/m to 250 mm/m, and a dimming performance T of greater than or equal to 25%.

18. The method for preparing a curved dimming film according to any one of claims 8 to 17, wherein, after the steps of pulse thermal shock and hot-press forming, the method further comprises a third step of cold shock shaping.

19. The method for preparing a curved dimming film according to claim 18, wherein the cold shock shaping comprises treating the curved dimming film obtained by the pulse thermal shock and hot-press forming in a mold at a temperature of below 40°C and a gauge pressure of 0.05MPa to 1.5MPa for 10 seconds to 600 seconds.

20. The method for preparing a curved dimming film according to claim 19, wherein the mold for the cold shock shaping comprises an upper shaping mold and a lower shaping mold, and the upper shaping mold and the lower shaping mold have a curved-surface function ⊖ ranging from 20 mm/m to 300 mm/m.

21. The method for preparing a curved dimming film according to any one of claims 8 to 20, wherein the curved dimming film is suitable for manufacturing an automotive sunroof dimming glass.

22. The method for preparing a curved dimming film according to claim 11, wherein a cross-sectional contour of a cross-sectional line at the same stacked position of the upper forming mold and the lower forming mold is at least one of a straight line, a circular arc, an elliptical arc, a parabola and an asymmetric curve.

23. The method for preparing a curved dimming film according to claim 8, wherein a cross-sectional contour of a cross-sectional line of the curved dimming film is at least one of a straight line, a circular arc, an elliptical arc, a parabola, and an asymmetric curve.

24. A curved dimming glass, comprising:
a first curved glass, a second curved glass, a curved dimming film laminated between the first curved glass and the second curved glass;
wherein a first interlayer is disposed between the first curved glass and the curved dimming film, and/or a second interlayer is disposed between the second curved glass and the curved dimming film;
wherein the curved dimming glass has a curved-surface function ⊖ ranging from 20 mm/m to 300 mm/m, and a dimming performance T of greater than or equal to 5%.

25. The curved dimming glass according to claim 24, wherein the curved dimming glass has a curved-surface function ⊖ ranging from 35 mm/m to 250 mm/m, and a dimming performance T of greater than or equal to 8%.

26. The curved dimming glass according to claim 24, wherein the curved dimming film is at least one selected from the group consisting of a suspended particle device dimming film, a polymer dispersed liquid crystal dimming film and an electrochromic dimming film.

27. The curved dimming glass according to claim 24, wherein the curved dimming film is the curved dimming film according to any one of claims 1 to 7 or the curved dimming film prepared by the method according to any one of claims 8 to 23.

28. The curved dimming glass according to claim 24, wherein the interlayer material is at least one selected from the group consisting of an EVA film, a TPU film, and a PVB film.

29. The curved dimming glass according to claim 24, wherein the curved glass is at least one selected from the group consisting of inorganic glass and organic glass.

30. The curved dimming glass according to any one of claims 24 to 29, wherein the curved dimming glass includes an automotive sunroof dimming glass.

31. The curved dimming glass according to claim 24, wherein a cross-sectional contour of a cross-sectional line of the curved dimming glass is at least one of a straight line, a circular arc, an elliptical arc, a parabola and an asymmetric curve.

32. A method for preparing a curved dimming glass, comprising:
providing a curved glass;
providing an interlayer;
providing a curved dimming film, which is fitted to the curved glass, having a curved-surface function ⊖ ranging from 20 mm/m to 300 mm/m;
layering the curved glass, the curved dimming film, and the interlayer according to a structure of the curved dimming glass, and then performing lamination processing.

33. The method for preparing a curved dimming glass according to claim 32, wherein fitting the curved dimming film to the curved glass means that in a section of a cross-sectional line at the same stacked position, the ratio of curvature R of the curved glass to curvature R of the corresponding curved dimming film ranges from 0.7 to 1.3.

34. The method for preparing a curved dimming glass according to claim 32, wherein the curved dimming film having the curved-surface function ⊖ is prepared by subjecting a planar dimming film sequentially to pulse thermal shock and hot-press forming.

35. The method for preparing a curved dimming glass according to claim 34, wherein the pulse thermal shock and the hot-press forming comprise:
a first step of pulse thermal shock, performing heating with a heating device at a temperature of 120°C to 280°C for 3 seconds to 60 seconds;
a second step of hot-press forming, treating in a mold at a temperature of 50°C to 180°C and a gauge pressure of 0.05MPa to 1.0MPa for 5 seconds to 90 seconds;
wherein the pulse thermal shock is performed at a temperature of at least 20°C higher than the temperature of hot-press forming.

36. The method for preparing a curved dimming glass according to claim 34, wherein the pulse thermal shock and the hot-press forming comprise:
a first step of pulse thermal shock, performing heating with a heating device at a temperature of 130°C to 250°C for 4 seconds to 35 seconds;
a second step of hot-press forming, treating in a mold at a temperature of 80°C to 140°C and a gauge pressure of 0.1MPa to 0.8MPa for 10 seconds to 60 seconds;
wherein the pulse thermal shock is performed at a temperature of at least 30°C higher than the temperature of hot-press forming.

37. The method for preparing a curved dimming glass according to claim 35, wherein the mold for the hot-press forming comprises an upper forming mold and a lower forming mold, and the upper forming mold and the lower forming mold have a curved-surface function ⊖ ranging from 20 mm/m to 300 mm/m.

38. The method for preparing a curved dimming glass according to claim 37, wherein in a section of the cross-sectional line at the same stacked position, a ratio of curvature R of the upper forming mold to the lower forming mold ranges from 0.9 to 1.1.

39. The method for preparing a curved dimming glass according to claim 37, wherein the heating temperatures of the upper forming mold and the lower forming mold are independently controllable.

40. The method for preparing a curved dimming glass according to claim 37, wherein an opposing surface of the upper forming mold and/or the lower forming mold has an uneven structure.

41. The method for preparing a curved dimming glass according to claim 37, wherein the lower forming mold has dense vacuum extraction channels with a pore diameter of 2 mm or less.

42. The method for preparing a curved dimming glass according to any one of claims 34 to 41, wherein, after the steps of pulse thermal shock and hot-press forming, the method further comprises a third step of cold shock shaping.

43. The method for preparing a curved dimming glass according to claim 42, wherein the cold shock shaping comprises treating the curved dimming film obtained by the pulse thermal shock and hot-press forming in a mold at a temperature of below 40°C and a gauge pressure of 0.05MPa to 1.5MPa for 10 seconds to 600 seconds.

44. The method for preparing a curved dimming glass according to claim 43, wherein the mold for the cold shock shaping comprises an upper shaping mold and a lower shaping mold, and the upper shaping mold and the lower shaping mold have a curved-surface function ⊖ ranging from 20 mm/m to 300 mm/m.

45. The method for preparing a curved dimming glass according to claim 32, wherein the lamination processing is performed at a lamination temperature of 80°C to 130°C and a lamination gauge pressure of 0.1MPa to 1.2MPa for a duration of 30 minutes to 120 minutes.

46. The method for preparing a curved dimming glass according to claim 32, wherein the curved dimming glass has a curved-surface function ⊖ ranging from 20 mm/m to 300 mm/m, and a dimming performance T of greater than or equal to 5%.

47. The method for preparing a curved dimming glass according to claim 32, wherein the curved dimming glass has a curved-surface function ⊖ ranging from 35 mm/m to 250 mm/m, and a dimming performance T of greater than or equal to 8%.

48. The method for preparing a curved dimming glass according to claim 32, wherein the curved dimming film is the curved dimming film according to any one of claims 1 to 7 or the curved dimming film prepared by the method according to any one of claims 8 to 23.

49. The method for preparing a curved dimming glass according to any one of claims 32 to 48, wherein the curved dimming glass includes an automotive sunroof dimming glass.

50. The method for preparing a curved dimming glass according to claim 37, wherein a cross-sectional contour of a cross-sectional line at the same stacked position of the upper forming mold and the lower forming mold is at least one of a straight line, a circular arc, an elliptical arc, a parabola and an asymmetric curve.

51. Use of the curved dimming glass according to any one of claims 24 to 31 or the curved dimming glass prepared by the method according to any one of claims 32 to 50, in automotive window glass, sunroof glass, or glass curtain wall.
